# EUROPEAN PATENT APPLICATION

(11) **EP 1 568 920 A2**
(43) Date of publication of application: **31.08.2005**
(21) Application number: 05251088.0
(22) Date of filing: 24.02.2005
(51) Int. Cl.: F16H 59/02

(54) **Vehicle operating lever assembly**

(30) Priority: 28.02.2004 GB 0404488
(71) Applicant: Booth, Brian, West Yorkshire BD7 2PL (GB)
(72) Inventor: Booth, Brian, West Yorkshire BD7 2PL (GB)
(74) Representative: Johnson, Graham Pierssene

(57) **Abstract**

The invention provides an operating lever assembly (1) for a motor vehicle (2), The assembly (1) comprises an operating lever (20) operable between a plurality of positions for selecting a mode of the motor vehicle (2) and immobilising means arrangeable to prevent the motor vehicle (2) from being driven. Also provided is a motor vehicle (2) comprising such an assembly (1).

## Description

The present invention relates to an operating lever assembly, particularly, though not exclusively, to a gear lever assembly for a motor vehicle.

Motor vehicles having a gear lever assembly comprising a gear lever to enable a driver to select a driving gear are well known. For "manual" motor vehicles the use of the gear lever is essential throughout the time whilst the car is being driven. With a manual motor vehicle, a driver has to select between typically at least four forward drive gears (or modes), reverse gear (or mode) and neutral as appropriate. Even with "automatic" motor vehicles it is generally necessary to have a shift or "gear" lever to allow a selection to be made between different modes, for example park, forward drive, reverse and neutral to allow the car to be driven.

Thus, if the operating lever (i.e. manual gear lever or automatic mode shift lever) of a motor vehicle is rendered substantially inoperable the vehicle itself may be rendered substantially inoperable.

There are known a number of ways to immobilise a motor vehicle in order to hinder theft thereof and these include means for immobilising the gear lever. For example, it is known to provide a removable immobilising device which can be installed and locked in place to secure the gear lever in a fixed position relative to the handbrake to prevent operation of either the handbrake or gear lever. Such immobilising devices can thus prevent vehicles from being driven. Also known are removable steering wheel immobilising devices which can be installed on to the steering wheel of the motor vehicle and locked in place. These have a projecting member arranged to hinder rotation of the steering wheel to prevent the vehicle from being driven. Each of these devices has the disadvantage that it must be removed each time it is desired to drive the motor vehicle and then left somewhere in the vehicle. Frequently, this is in a passenger foot well and the device may thus become muddy and when installed it may dirty the steering wheel or gear lever and/or handbrake. Additionally, a determined thief may still be able to circumvent these immobilising devices and render a car operable.

Accordingly, the present invention aims to address at least one disadvantage associated with known gear lever assemblies and motor vehicle immobilisers whether discussed herein or otherwise.

According to a first aspect of the present invention there is provided an operating lever assembly for a motor vehicle, wherein said assembly comprises an operating lever operable between a plurality of positions for selecting a mode of the motor vehicle wherein the operating lever assembly comprises immobilising means arrangeable to prevent the motor vehicle from being driven.

Suitably, the immobilising means of the operating lever assembly comprises a removable component which, when removed, prevents the motor vehicle from being driven.

The term mode is defined to include all of the modes for an automatic car and also the gears and neutral in a manual car (i.e. first gear is one mode whilst second gear is another mode)

Preferably the operating lever comprises a gear lever. The driving mode may be a gear.

The operating lever may be a shift lever for an automatic vehicle. The mode may be the automatic modes, for example, park, drive, reverse, neutral and/or one or more gear modes or selections.

Preferably the operating lever comprises a non-removable component.

The immobilising means of the operating lever assembly may comprise securing means for securing the non-removeable component.

Preferably the securing means comprises locking means for locking the non-removable component in a selected position.

Preferably the operating lever assembly comprises securing means for securing the non-removable component once the removable component has been removed.

Preferably the removable component provides one immobilisation means which is operable to prevent the motor vehicle from being driven.

The assembly may comprise a plurality of immobilising means and in which, preferably, one or each immobilising means is operable to prevent the motor vehicle from being driven.

By "immobilising means is operable to prevent the motor vehicle from being driven" it is meant that whilst the or each immobilising means is operative the full range of normal controls for the motor vehicle, namely; ability to start, ability to steer, ability to accelerate, ability to brake and ability to select a gear from all possible driving gears is not available. Thus, whilst the or each immobilising means is operative it is not possible to drive the motor vehicle in a normal manner. Consequently, the motor vehicle will suitably only be able to move short distances and/or move slowly or not be able to move at all.

Suitably, when the immobilising means is operative the vehicle cannot be started.

Suitably, when the immobilising means is operative the ability to select a gear or a mode from all possible driving gears or modes is not available.

Preferably, the immobilising means comprises means for immobilising and thus substantially preventing operation of the operating lever.

Suitably, the operating lever assembly comprises an operating lever or gear lever assembly for a "manual" motor vehicle. Suitably, the operating lever assembly comprises an operating lever or shift lever assembly for an automatic motor vehicle.

Suitably, the operating lever is operable to at least four positions for selecting a forward driving gear or mode of the motor vehicle. Suitably, the operating lever is operable to a position for selecting a reverse driving or mode of the motor vehicle. Suitably, the operating lever is operable to a neutral position in which no driving gear or mode of the motor vehicle is selected.

Suitably, the operating lever comprises a handle portion and a stem wherein the stem projects, suitably downwardly, from the handle portion and is linked, in use, to the transmission or gear box of a motor vehicle.

Suitably, the operating lever assembly comprises a housing from which the operating lever stem extends. Suitably, the housing is arranged to be fixedly mounted within a motor vehicle. Suitably, the housing accommodates linkages for connecting the operating lever to the gear box or transmission of a motor vehicle.

Suitably, when the immobilising means is operative the vehicle is maintained in a set driving gear or mode. The set driving gear or mode may be a high gear or drive mode, for example, third or preferably fourth or fifth gear such that attempts to drive the vehicle may cause the engine to stall.

Alternatively, when the immobilising means is operative the vehicle may be maintained in neutral such that if the engine is started it cannot cause the vehicle to move.

Suitably, the immobilising means comprises a number of immobilising means each of which are operable to prevent the motor vehicle from being driven.

Suitably, if one of the immobilising means is circumvented one or more additional immobilising means may still prevent the motor vehicle from being driven.

Suitably, the immobilising means comprises mechanical immobilising means.

Suitably, the immobilising means comprises electronic immobilising means.

Preferably, the immobilising means comprises a combination of mechanical and electronic immobilising means.

Suitably, the mechanical immobilising means, when operative, removes the ability to select a gear or mode from all possible driving gears or mode.

Suitably, the gear lever comprises a removable component which when removed provides mechanical immobilising means by rendering the operating lever substantially inoperable.

Suitably, the operating lever comprises a component which, in normal use, is non-removable and to which the removable component is attachable.

Suitably, the removable component comprises a cavity arranged to receive a part of the non-removable component for attachment and/or securement thereto. Alternatively, or preferably in addition, the non-removable component may comprise a cavity arranged to receive a part of the removable component for attachment and/or securement thereto.

Suitably, the operating lever comprises a removable handle releasably attachable to an operating lever stem. Suitably, the removable handle comprises a neck portion arranged to locate around an end of the operating lever stem.

Suitably, the operating lever assembly comprises a housing from which the operating lever extends and which housing is arranged to be fixedly mounted within a motor vehicle. Suitably, a proximal end of the operating lever is retained within the housing such that the operating lever can move relative to the housing but such that said proximal end cannot, in normal use, be removed from the housing. Suitably, the non-removable component of the operating lever comprises said proximal end. Suitably, a distal end of the operating lever opposed to said proximal end comprises a handle. Suitably, the removable component of the operating lever comprises said distal end. Suitably, a removable handle comprises the distal end of the operating lever and a non-removable operating lever stem comprises the proximal end of the operating lever.

Suitably, the point of separation of the removable component of the operating lever from the non-removable component of the operating lever lies at least a quarter, preferably at least third, of the operating lever length from the housing.

Suitably, the operating lever length is measured from the point from which it extends from the housing to the extreme distal end of the operating lever.

Suitably, the point of separation of the removable component of the operating lever from the non-removable component of the operating lever lies no more than three quarters, preferably no more than half, for example no more than a third of the operating lever length from the extreme distal end of the operating lever.

Suitably, the operating lever stem comprises at least half, preferably at least two thirds of the operating lever length.

Suitably, the removable handle comprises no more than a third of the operating lever length.

Suitably, a complete operating lever is formed when the removable component is correctly positioned relative to the non-removable component.

The removable component may be arranged to automatically be retained in position when correctly located relative to the non-removable component to complete the operating lever. Alternatively, the removable component may be arranged such that it is only retained in position when correctly located relative to the non-removable component and a user actuates retaining means.

Suitably, the removable component of the operating lever can only be detached from the non-removable component if a user actuates release means.

Suitably, when correctly located relative to the non-removable component the removable component of the operating lever can be retained in position by being locked in place. Suitably, the removable component comprises a lock.

Suitably, the lock may automatically actuate to an operative position when the removable component is correctly located relative to the non-removable component. Alternatively, the lock may be actuated to an operative position by a user, for example with a key.

Suitably, the lock can only be made inoperative to allow the removable component to be detached if actuated by a user, for example with a key.

Suitably, the removable component comprises a handle which incorporates a locking mechanism. Suitably, the lock mechanism is key operated to allow the removable handle to be detached.

Suitably, the handle incorporates a lock barrel for receiving a key. Suitably, the handle comprises a cover member for covering the lock barrel.

Suitably, the removable component comprises a handle having a cavity arranged to receive the upper part of the stem of the operating lever for attachment thereto. Suitably, the cavity is defined by a neck of the handle.

Suitably, the handle comprises a locking member which extends into the cavity of the handle.

Suitably, the locking member is connected to a lock barrel and is key operated.

Suitably, the stem of the operating lever comprises a locking cavity for receiving the locking member of the handle.

Suitably, the locking cavity and locking member are configured to cooperate such that when the locking member is in one orientation and is in the locking cavity, the locking member can be removed and the handle can thus be released and when in an alternative orientation the locking member cannot be removed and the handle is thus securely locked in place.

Suitably, the cover member comprises an uppermost portion of the operating lever handle. Suitably, the cover member may be pivotally attached to the remainder of the handle. Suitably, the cover member is movable between an access position in which a user can gain access to insert a key in the lock barrel and a driving position in which the cover member covers the lock barrel and provides a handle which is comfortable for a user to manipulate. Suitably, with the cover member in the driving position the operating lever may have the appearance of a "normal" operating lever.

Suitably, the removable component and non removable component of the operating lever have cooperating surfaces arranged to prevent twisting relative to one another. For example, the upper portion of the stem may comprise a square cross-section and the removable handle may comprise a square cross-section cavity for receiving the stem.

Suitably, the cooperating surfaces ensure the removable component and can only be attached to the non-removable component in a specific orientation.

Preferably, the removable component comprises a key way for cooperating with a keyed portion of the non-removable component. For example, the upper end portion of the stem may comprise a longitudinal protrusion and the removable handle may comprise a cavity for receiving the end of the stem, said cavity further defining a subsidiary longitudinal channel providing a key way for cooperating with the protrusion.

Alternatively, or in addition, the non-removable component may comprise a key way for cooperating with a keyed portion of the removable component.

The removable component and non-removable component may attach to one another such that a torque of greater than 300 Nm is required to separate them unless deliberately released from one another.

Suitably, the mechanical immobilising means comprises securing means for engaging the operating lever and substantially preventing movement thereof. Suitably, such means are provided in addition to the operating lever having a removable component.

Suitably, the securing means comprises means for securing the operating lever in a set position.

Suitably, the securing means is mounted to the housing. Suitably, the securing means is lockable relative to the housing. Suitably, the securing means comprises a lock which may be key operable. Suitably, the lock comprises a locking member arranged to engage the housing. Suitably, the same key may operate the lock of the securing means and of the removable component of the operating lever.

Preferably, the immobilising means comprises securing means for engaging the operating lever and securing it in a set position in which a driving gear or mode or neutral is selected and such that it cannot be moved to an alternative position in which an alternative gear or mode is selected.

Suitably, said particular driving gear or mode is a forward driving gear or mode. Preferably, said particular driving gear or mode is a high forward driving gear or mode, for example third, preferably fourth or fifth gear.

Alternatively, the immobilising means may comprise securing means for engaging the operating lever and securing it in a position in which neutral is selected.

Preferably, the immobilising means comprises securing means for engaging the non-removable component for example a stem of the operating lever, and securing it in a selected position.

Suitably, the securing means is moveable between an operative and inoperative position and lockable in said operative position. The securing means may also be lockable in the inoperative position to prevent inadvertent immobilisation of the operating lever.

The securing means may automatically lock in position when moved to said operative position. Alternatively, the securing means may only lock in position when a lock is actuated by a user, for example with a key.

The securing means may automatically lock in position when moved to said inoperative position. Alternatively, the securing means may only lock in position when a lock is actuated by a user, for example with a key.

Suitably, the locking member and securing means can be actuated with the same key.

Suitably, the securing means comprises a plate moveable between an operative and inoperative position and lockable in said operative position such that when in said operative position it engages the operating lever, or preferably the non-removable component of the operating lever, and secures it in a selected position.

Suitably, the securing means comprises a slideable plate. The plate may be slidably mounted to the housing.

The securing means may be biased towards the inoperative position, for example, by gravity.

The plate may be lockable in said inoperative position as well as said operative position to ensure that it cannot accidentally cause immobilisation of the operating lever when the motor vehicle is being driven.

Suitably, the electronic immobilising means, when operative, removes the ability to start the motor vehicle.

Suitably, when operative, the electronic immobilising means disables the starter motor circuit of the motor vehicle.

Suitably, the electronic immobilising means comprises a transmitter or receiver in a removable component of the operating lever and suitably a corresponding transmitter or receiver in a part of the operating lever assembly which remains in the vehicle, in use. Suitably, the housing comprises said corresponding transmitter or receiver. Suitably, the vehicle will not start unless the transmitter or receiver in the removable component is correctly positioned, i.e. unless the operating lever is complete.

Suitably, the operating lever assembly comprises immobilising means comprising, a removable component of the operating lever and at least one of securing means or electronic immobilising means.

Suitably, the operating lever assembly comprises immobilising means comprising a removable component of the operating lever, securing means and electronic immobilising means.

According to a second aspect of the present invention there is provided a motor vehicle comprising an operating lever assembly, which operating lever assembly comprises an operating lever operable between a plurality of positions for selecting a driving mode of the motor vehicle wherein the operating lever assembly comprises immobilising means arrangeable to prevent the motor vehicle from being driven.

Suitably, the immobilising means of the operating lever assembly comprises a removable component which, when removed, prevents the motor vehicle from being driven.

Suitably, the motor vehicle comprises a car.

Suitably, the motor vehicle comprises a "manual" motor vehicle.

Preferably the removable component provides immobilising means. Suitably, when the immobilising means is operative the vehicle cannot be started.

Suitably, when the immobilising means is operative the ability to select a gear or mode from all possible driving gears or modes is not available.

Suitably, the motor vehicle comprises a operating lever assembly according to the first aspect of the present invention.

The present invention will now be illustrated by way of example with reference to the accompanying drawings, in which:
Figure 1 is a perspective view of an operating lever assembly installed in a motor vehicle (partially shown);

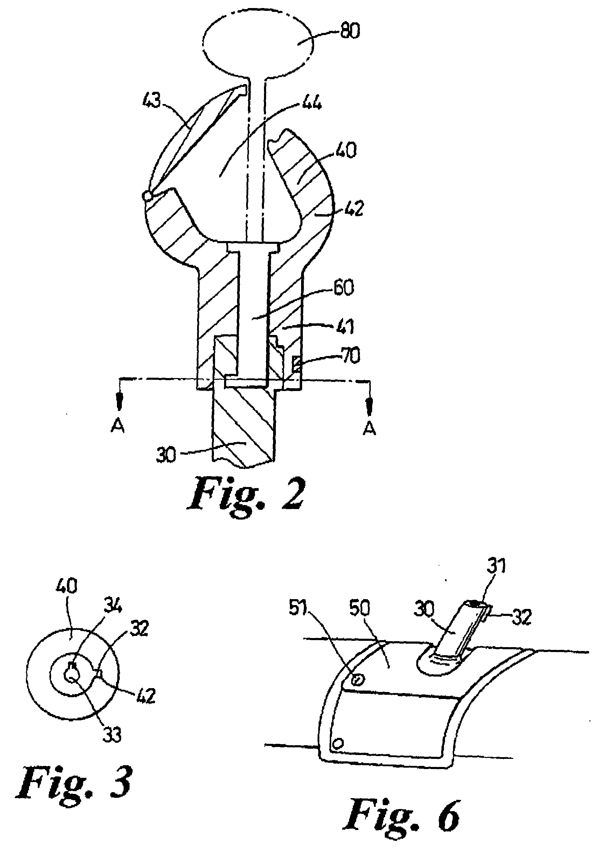

Figure 2 is a cross-section of an operating lever having a removable handle;
Figure 3 is a cross-section of an operating lever having a removable handle corresponding to that along line A-A of Figure 2;
Figure 4 is a cross-section of a removable handle of an operating lever;
Figure 5 is a cross-section of a stem of an operating lever;
Figure 6 is a perspective view of an immobilised operating lever.

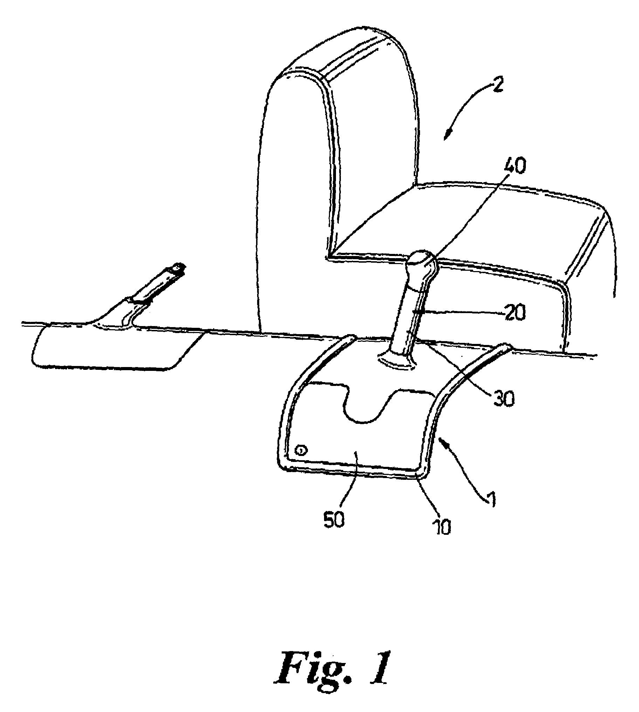

As illustrated by Figure 1, an operating lever assembly 1 or gear lever assembly of the present invention can be installed in a motor vehicle in place of a known operating lever assembly or gear lever assembly.

The present invention may be used in a manual vehicle for use with a gear lever which is used to select different modes or gears or in an automatic vehicle for use with a shift lever which selectively engages the engine of the vehicle in a particular mode, for example, park, reverse, drive, neutral and one or more gears or gear ranges. However, the present invention will now be described in detail in relation to a gear lever with a manual vehicle or car.

The gear lever assembly 1 comprises a housing 10 from which projects a gear lever 20. The gear lever 20 comprises a stem 30 and a removable handle 40. The gear lever assembly 1 further comprises a number of immobilising means.

The handle 40 is removable from the stem 30 making the stem 30 difficult to move and thus the selection of gear difficult to make which consequently makes the vehicle 2 hard to drive.

The removable handle 40 incorporates an electronic transmitter or receiver 70 and the housing 10 incorporates a corresponding transmitter or receiver (not shown). Unless the transmitter or receiver 70 is correctly located, i.e. the gear lever 10 is complete, the starter motor circuit of the vehicle is disabled. Thus, with the gear lever handle 40 removed the vehicle cannot be started.

The assembly further comprises securement means in the form of a lockable sliding plate 50. When positioned as shown in Figure 6, this maintains the vehicle 2 in a set gear, in this case third gear, making the vehicle 2 very difficult to drive.

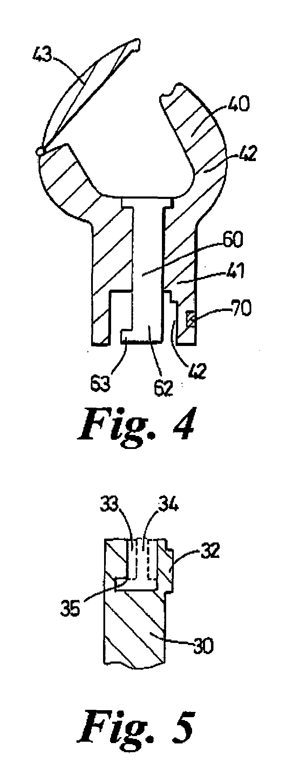

As best shown by Figure 4, the removable handle 40 comprises a neck 41 defining a cavity 42 for receiving the end 31 of the gear lever stem 30. The cavity 42 is substantially circular in cross-section but has a key way 43 in the form of a longitudinal channel extending into the neck 41. The end 31 of the stem 30 is substantially circular in cross-section and fits snugly within the cavity 42 of the handle 40. The stem has a keyed portion in the form of a longitudinal protrusion 32 projecting therefrom. The cooperation of the key way and keyed portion prevents relative rotation or twisting of the removable handle 40 and gear lever stem 30. Additionally, it ensures the handle 40 can only be located onto the stem 30 in a specific orientation.

The removable handle 40 further comprises retaining means to allow it to be retained in position once correctly located onto the stem 30. The retaining means comprise a lock 60 comprising a lock barrel 61, for receiving a key 80 (shown in broken lines), and a locking member 62. The locking member 62 cooperates with a locking chamber 33 in the stem 30 such that when in one orientation it cannot be removed therefrom and thus the handle 40 is retained on the stem 30. The orientation of the locking member 62 is determined by the lock position actuated by the key and in an alternative orientation the locking member 62 can be removed from the locking cavity 33 allowing the handle 40 to be detached from the stem.

In the embodiment shown the locking chamber 33 comprises an entrance pathway 34 amd a retaining lip 35. The locking member 62 comprises a locking tooth 63. In use, the handle is orientated and the locking member 62 is orientated by actuation of the lock with the key such that the locking tooth 63 is aligned with the entrance pathway 34. Once correctly located the lock is actuated with the key 80 to orientate the locking member 62 such that the tooth 63 lies under the locking lip 35 thus preventing withdrawal of the locking member 62 from the locking chamber 33.

In the embodiment shown the key 80 can only be removed when the locking member 62 is orientated with the tooth 63 under the lip 35. Thus, this provides a safety feature to stop an authorised user accidentally operating the vehicle 2 without properly attaching the handle 40 of the gear lever.

The handle 40 further comprises a head portion 42 having a cover 43 pivotally connected thereto. In use, the cover 43 can be moved to reveal an access chamber 44 via which a key can be inserted to actuate the lock 60. When positioned over the access chamber the cover 43 gives the gear lever a "normal" appearance and provides a handle 40 which is comfortable for a user to operate.

The handle 40 further comprises an electronic transmitter or receiver 70. Unless the handle 40 and consequently the transmitter or receiver 70 are correctly located to form a complete gear lever then the absence of the correctly located transmitter or receiver prevents the vehicle 2 from being started.

The lockable sliding plate 50 comprises a lock 51 such that the plate 50 can be locked in an immobilising (operative) position (Figure 6) and optionally (for safety to prevent inadvertent immobilisation) in a non-immobilising (inoperative) position (Figure 1). In the embodiment shown the lock 51 is actuated by the same key as the lock 60 of the handle 40.

In use, with the handle 40 correctly located in position on the stem 30 and retained in place by the lock 60 the electronic transmitter or receiver 70 is also correctly located. Thus, with the lockable sliding plate 50 in the inoperative position (Figure 1) the vehicle 2 can be started and driven in the manner of known vehicles.

The vehicle 2 may be immobilised by actuating the lock 60 of the handle 40 to remove the handle 40 from the stem 30. This will render the stem 30 impossible or at least difficult to move between gear positions. Additionally, the vehicle 2 will not start as the transmitter or receiver 70 will not be correctly positioned. The user can then take the handle 40 away with them when they leave the vehicle 2 parked.

Alternatively, or preferably additionally, the vehicle 2 can be immobilised by locating the gear lever in third gear and moving the lockable sliding plate 50 into the operative position and locking it in place. The vehicle 2 will then be kept in third gear and thus be very difficult to drive regardless of whether or not the other immobilising means are operative.

It will be readily appreciated that the immobilising means described herein may be easy to operate but may be very troublesome for an unauthorised person to overcome.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An operating lever assembly (1) for a motor vehicle (2), wherein said assembly (1) comprises an operating lever (20) operable between a plurality of positions for selecting a mode of the motor vehicle (2) and wherein the operating lever assembly (1) comprises immobilising means arrangeable to prevent the motor vehicle (2) from being driven.

2. An assembly (1) according to Claim 1, wherein the operating lever (20) comprises a gear lever.

3. An assembly (1) according to Claim 1 or 2, wherein the immobilising means comprises mechanical immobilising means.

4. An assembly (1) according to any of Claims 1 to 3, wherein the immobilising means comprises electronic immobilising means.

5. An assembly (1) according to any preceding claim, wherein the operating lever (20) comprises a non-removable component (30).

6. An assembly (1) according to Claim 5, wherein the immobilising means of the operating lever assembly comprises securing means (50) for securing the non-removeable component (30).

7. An assembly (1) according to any preceding claim, wherein the immobilising means of the operating lever assembly (20) comprises a removable component (40) which, when removed, prevents the motor vehicle (2) from being driven.

8. An assembly (1) according to Claim 7, wherein the operating lever (20) comprises a component (30) which, in normal use, is non-removable and to which the removable component (40) is attachable.

9. An apparatus (1) according to Claim 8, wherein the removable component (40) comprises a handle which incorporates a locking mechanism (60).

10. An apparatus (1) according to any of Claims 8 to 12, wherein the removable component (40) and non removable component (30) of the operating lever (20) have cooperating surfaces arranged to prevent twisting relative to one another.

11. An assembly (1) according to any of Claims 6 to 10, wherein the operating lever assembly (1) comprises a housing (10) from which the operating lever (20) extends and which housing (10) is arranged to be fixedly mounted within a motor vehicle (2) and the securing means (50) is lockable relative to the housing (10).

12. An assembly (1) according to Claim 11, wherein the securing means (50) comprises a slideable plate.

13. A motor vehicle (2) comprising an operating lever assembly (1), which operating lever assembly (1) comprises an operating lever (20) operable between a plurality of positions for selecting a driving mode of the motor vehicle (2) and wherein the operating lever assembly (1) comprises immobilising means arrangeable to prevent the motor vehicle (2) from being driven.

14. A motor vehicle (2) according to Claim 13, comprising an operating lever assembly (1) according to any of Claims 1 to 12.
